# EUROPEAN PATENT APPLICATION

(11) **EP 1 548 227 A1**
(43) Date of publication of application: **29.06.2005**
(21) Application number: 03293287.3
(22) Date of filing: 22.12.2003
(51) Int. Cl.: E21B 17/043, E21B 17/046, F16L 13/02

(54) **Disposable locking mechanism**

(71) Applicant: SERVICES PETROLIERS SCHLUMBERGER, 75007 Paris (FR); Schlumberger Technology B.V., 2514 JG Den Haag (NL); SCHLUMBERGER HOLDINGS LIMITED, Road Town, Tortola (VG)
(72) Inventor: Airey, Peter, 77130 Saint-Germain Laval (FR)
(74) Representative: Menès, Catherine

(57) **Abstract**

The invention concerns a locking mechanism (4) for securing together a first and a second part (2,3) of a while drilling tool, said locking mechanism comprising a first washer (40) designated to be fixed to said first part (2) of the tool and a second washer (41) designated to be fixed to said second part (3) of said tool, said first and second washers being welded (5) together in order to prevent any unwanted rotation between said first and second parts.

## Description

The invention relates to a disposable locking mechanism. More particularly, the invention provide a simple, cheap and very reliable means for locking a threaded part on the outside of a wireline tool, particularly a while-drilling tool, so that it can not be unintentionally unscrew.

In hydrocarbon exploration and production, it is of prime importance to determine (a) if a given earth formation contains hydrocarbon, (b) the amount of hydrocarbon within the formation, and (c) the producibility of the hydrocarbon in place within the formation. The amount of hydrocarbon present within a formation is a function of the pore space or the "porosity" of the formation. In drilling wells for the production of hydrocarbon, and even after those wells have been drilled, it is desirable to measure the porosity of each prospective hydrocarbon producing formation penetrated by the borehole. It is even more desirable, for economic and operational reasons well known in the art, to determine the porosity of prospective formations during the actual drilling of the borehole.

Measurement-while-drilling (MWD) services were introduced commercially in the 1970's. These systems were typically mounted within drill collars and positioned as close to the drill bit as possible. Early MWD systems were directed toward the measurement of critical drilling parameters such as weight and the torque on the drill bit and direction of the drilled borehole. The operational and commercial value of such measurements are well known in the art. Subsequently, systems which measured formation characteristics were introduced. Since such measurements provide information similar to wireline logging measurements, they are commonly referred to as logging-while-drilling (LWD) systems. There are many advantages in measuring formation parameters while drilling the borehole, rather than after the borehole has been drilled. The operational, financial, and technical advantages of LWD are likewise well known in the art.

Many while-drilling tools have external threaded parts which are exposed to high frictional, thermal shock and vibrational loads. These loads can cause the parts to unscrew and fall of. Falling of those parts in the wellbore is particularly prejudicial since the drilling operation may have to be stopped and the measurements that are performed during this drilling phase can be seriously affected. Regarding conditions on the rig and time allowed to this drilling phase, techniques to prevent the parts from unscrewing have to be simple to install, rugged and reliable downhole. From another side, they also have to be simple to remove after retrieval of the tool.

Several techniques have been developed in the past, trying to achieve this aim among which are locking pins, keys and screws, left hand (or right hand) threads such that frictional forces tend to tighten the parts, high make-up torques, thread locking compounds, and when all these fails, welding. Welding is generally accepted as the most reliable and rugged solution. However, some of the disadvantages of welding are that it damages the parts being welded, reducing their lifetime, and may be difficult to remove without further damage to the parts.

It is thus an object of the invention to provide a reliable and simple solution that permit pieces of a while drilling tool not to unscrew during the drilling operation, said solution avoiding any problems encountered with the basic welding of those parts.

According to this, the invention relates to a locking mechanism for securing parts of a while drilling tool, said locking mechanism comprising a first washer designated to be fixed to a part of said tool and a second washer designated to be fixed to a nut screwing said part to the tool, said first and second washer being welded together in order to prevent any unwanted rotation of said part and nut.

Additional objects and advantages of the invention will become apparent to those skilled in the art upon reference to the detailed description taken in conjunction with the single provided figure.

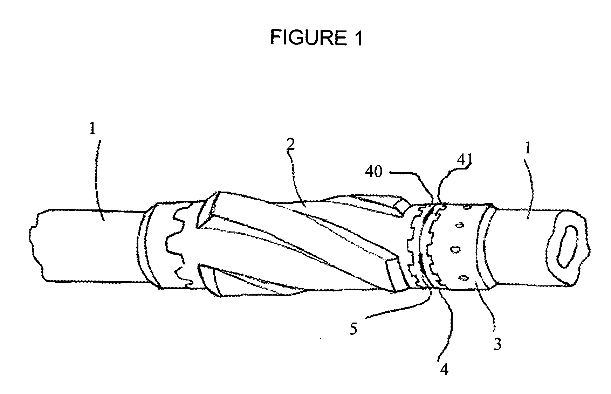

The single figure represents a logging while drilling collar 1 to which a stabilizer 2 is fixed by a nut 3. The nut is itself threaded to the collar. Connection between the stabilizer and the nut is secured with a locking mechanism 4 according to the invention. The locking mechanism 4 comprises two disposable washers 40 and 41, each have one face designed to engage the part of the stabilizer to be fixed and the corresponding nut 3. The washer 40 thus is linked to the stabilizer (which rotates) and cannot be disengaged from said stabilizer after the tread has been tightened. This linking with the stabilizer on one side and the nut on the other side may be achieved by castellation, pins, lugs or similar means. The second faces of washers 40 and 41 have two functions. The first one is to support the thrust load between the stabilizer and the nut while the threaded connection is tightened and the second one is to provide a convenient profile for welding said two washers together. A welding 5 thus links said two washers 40 and 41.

Before unscrewing the parts, the weld must be ground and a circumferential undercut in the part below the weld allows grinding without risk of damaging the stabilizer or the nut. After disassembly the washers are discarded, while the other parts are undamaged and may be reused as often as necessary.

The locking mechanism of the invention can thus be easily used on any part of tool that are screwed one to each other and, particularly when they rotate, have also to support heavy loads or chocks.

## Claims

1. A locking mechanism (4) for securing parts (2, 3) of a while drilling tool, said locking mechanism comprising a first washer (40) designated to be fixed to a first part (2) of said tool and a second washer (41) designated to be fixed to a second part (3) of said tool, said first and second washers being welded (5) together in order to prevent any unwanted rotation between said first and second parts.

2. A locking device according to claim 1, wherein said first and second washer have first faces that are fixed respectively to said first and second part of the tool and second faces that are welded together.
